# EUROPEAN PATENT APPLICATION

(11) **EP 4 793 870 A1**
(43) Date of publication of application: **19.08.2026**
(21) Application number: 24877041.4
(22) Date of filing: 27.09.2024
(51) Int. Cl.: G06Q 50/06

(54) **REMAINING GAS AMOUNT MANAGEMENT SYSTEM**

(30) Priority: 13.10.2023 JP 2023177441
(71) Applicant: Panasonic Intellectual Property Management Co., Ltd., Kadoma-shi, Osaka 571-0057 (JP)
(72) Inventor: WATANABE, Takashi, Osaka 571-0057 (JP); SHIRASAWA, Tadanori, Osaka 571-0057 (JP); YAMASHITA, Masumi, Osaka 571-0057 (JP); WATANABE, Kenichi, Osaka 571-0057 (JP); FUSAKAWA, Kazue, Osaka 571-0057 (JP)
(74) Representative: SSM Sandmair
(86) International application number: PCT/JP2024/034678
(87) International publication number: WO 2025/079442

(57) **Abstract**

A remaining gas amount management system includes: a flow rate measurer that measures gas flowing to a gas appliance from a gas container located at a consumer's place or at each of a plurality of consumer's places; a remaining amount calculator that calculates, as a first predicted remaining amount based on a measurement result of the flow rate measurer, a remaining gas amount of the gas container after a lapse of a predetermined number of days, and calculates, as a second predicted remaining amount, the remaining gas amount of the gas container after a lapse of a number of days obtained by adding a predetermined number of additional days to the predetermined number of days; and a determiner that determines a replacement timing of the gas container based on the first predicted remaining amount and the second predicted remaining amount.

## Description

### Technical Field

The present disclosure relates to a remaining gas amount management system.

### Background Art

A delivery date determining system has been conventionally known (PTL 1). The delivery date determining system stabilizes the supply of the gas in such a manner that: a date on which a remaining gas amount becomes a predetermined amount is predicted based on a gas use amount of a consumer's place; and a gas container is delivered on this predicted date.

### Citation List

### Patent Literature

PTL 1: Japanese Laid-Open Patent Application Publication No. 2013-254415

### Summary of Invention

### Technical Problem

However, even when the date on which the remaining gas amount becomes the predetermined amount is predicted, the remaining gas amount may decrease more than expected due to sudden gas consumption. Therefore, there is a need to enhance reliability in suppressing gas run-out compared to the above-described conventional technology.

An object of the present disclosure is to provide a remaining gas amount management system capable of enhancing reliability in suppressing gas run-out compared to conventional systems.

### Solution to Problem

A remaining gas amount management system of the present disclosure includes: a flow rate measurer that measures gas flowing to a gas appliance from a gas container located at a consumer's place or at each of a plurality of consumer's places; a remaining amount calculator that calculates, as a first predicted remaining amount based on a measurement result of the flow rate measurer, a remaining gas amount of the gas container after a lapse of a predetermined number of days, and calculates, as a second predicted remaining amount, the remaining gas amount of the gas container after a lapse of a number of days obtained by adding a predetermined number of additional days to the predetermined number of days; and a determiner that determines a replacement timing of the gas container based on the first predicted remaining amount and the second predicted remaining amount.

According to the present disclosure, the first predicted remaining amount of the gas in the gas container after a lapse of the predetermined number of days is calculated, and in addition, the remaining gas amount of the gas container after a lapse of the number of days obtained by adding the predetermined number of additional days (one day, for example) to the predetermined number of days is also calculated as the second predicted remaining amount. To be specific, the remaining gas amount after a lapse of the number of days obtained by adding a margin to the predetermined number of days is calculated as the second predicted remaining amount. Thus, the replacement timing of the gas container can be determined based on the first predicted remaining amount and the second predicted remaining amount. Therefore, even if there is a sharp decrease in the remaining gas amount due to the gas consumption, which makes it difficult to prevent the gas run-out by only calculating the first predicted remaining amount, the gas run-out can be suppressed by timely replacing the gas container. Thus, it is possible to enhance reliability in suppressing gas run-out compared to the conventional systems.

In the above disclosure, when the first predicted remaining amount is below a first threshold for determining replacement of the gas container, the determiner may determine, as a replacement date of the gas container, a date after a lapse of the predetermined number of days.

According to the above configuration, when the first predicted remaining amount is below the first threshold (for example, an amount corresponding to 10% of the volume of the gas container), a date after a lapse of the predetermined number of days is determined as the replacement date of the gas container. Thus, when there are a pair of gas containers in the consumer's place, the consumption of the gas in the reserve gas container can be prevented. Moreover, when there is one gas container in the consumer's place, the gas run-out can be prevented.

In the above disclosure, when the first predicted remaining amount exceeds a first threshold for determining replacement of the gas container, and the second predicted remaining amount is below a second threshold for determining gas run-out of the gas container, the determiner may determine, as a replacement date of the gas container, a date after a lapse of the predetermined number of days.

According to the above configuration, when the first predicted remaining amount exceeds the first threshold, but the second predicted remaining amount is below the second threshold, prompt replacement of the gas container is required. Therefore, a date after a lapse of the predetermined number of days can be determined as the replacement date of the gas container.

In the above disclosure, when the first predicted remaining amount exceeds a first threshold for determining replacement of the gas container, and the second predicted remaining amount is below the first threshold and exceeds a second threshold for determining gas run-out of the gas container, the determiner may determine, as a replacement date of the gas container, a date after a lapse of a number of days obtained by adding one or more days to the predetermined number of days.

According to the above configuration, when the first predicted remaining amount exceeds the first threshold, and the second predicted remaining amount exceeds the second threshold, there is a slightly larger margin than when the second predicted remaining amount is below the second threshold. Therefore, a date after a lapse of the number of days obtained by adding one or more days to the predetermined number of days can be determined as the replacement date of the gas container.

In the above disclosure, when the first predicted remaining amount is below a first threshold for determining replacement of the gas container and exceeds a second threshold for determining gas run-out of the gas container, or when the first predicted remaining amount is below the second threshold, the remaining amount calculator may not perform calculation of the second predicted remaining amount.

According to the above configuration, in the above cases, prompt replacement of the gas container is required. Therefore, it is possible to avoid the calculation of the second predicted remaining amount which is unnecessary in these cases. Moreover, since the calculation of the second predicted remaining amount is avoided, calculation processing by a CPU and the like can be avoided, and the load on the center server and the like can be reduced.

In the above disclosure, the predetermined number of days may be a number of days required from when the replacement timing is determined by the determiner until the gas container is replaced by a gas supplier.

According to the above configuration, the predetermined number of days, which serves as a reference for calculating the first predicted remaining amount and the second predicted remaining amount, can be based on the number of days required for a gas container replacement process by the gas supplier.

### Advantageous Effects of Invention

The present disclosure can provide the remaining gas amount management system capable of enhancing reliability in suppressing gas run-out compared to the conventional systems.

### Brief Description of Drawings

FIG. 1 is a block diagram showing a remaining gas amount management system according to one embodiment.
FIG. 2 is a block diagram showing detailed configurations of a consumer's place and a center server in the remaining gas amount management system of FIG. 1.
FIG. 3 is an explanatory diagram showing a table including replacement timings of a gas container based on a first predicted remaining amount and a second predicted remaining amount.

### Description of Embodiments

Hereinafter, a remaining gas amount management system according to an embodiment of the present disclosure will be described with reference to the drawings. The remaining gas amount management system described below is merely one embodiment of the present disclosure. Therefore, the present disclosure is not limited to the following embodiment, and additions, deletions, and modifications may be made without departing from the scope of the present disclosure.

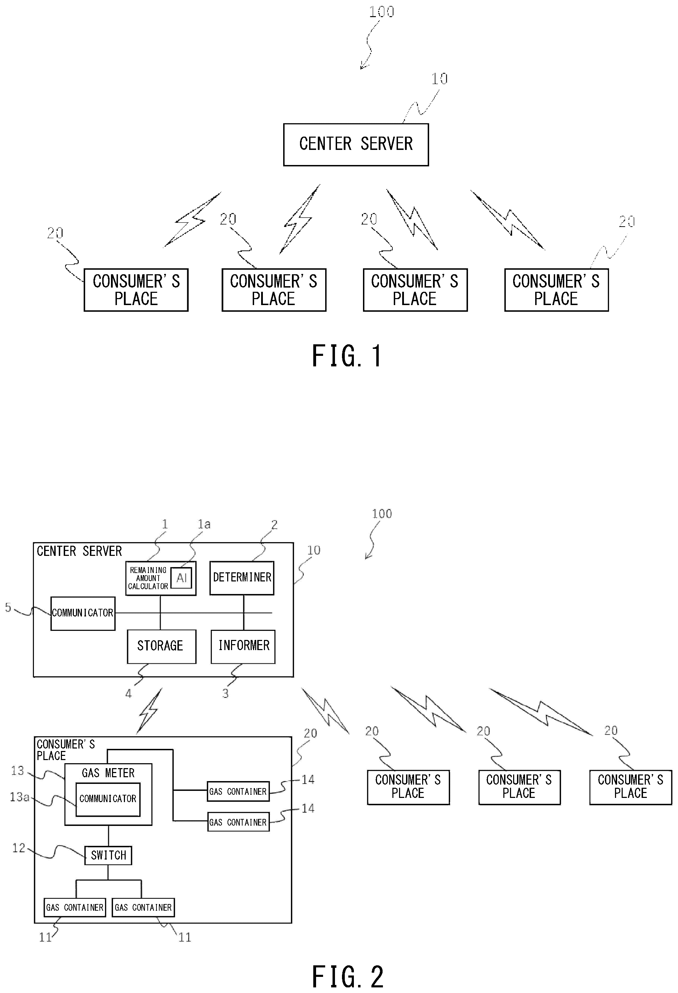

FIG. 1 is a block diagram showing a remaining gas amount management system 100 according to the present embodiment. FIG. 2 is a block diagram showing detailed configurations of a consumer's place 20 and a center server 10 in the remaining gas amount management system 100 of FIG. 1.

As shown in FIG. 1, the remaining gas amount management system 100 includes the center server 10 and the consumer's places 20. FIG. 1 shows four consumer's places 20. However, in the remaining gas amount management system 100, the number of consumer's places 20 may be three or less or may be five or more.

As shown in FIG. 2, each consumer's place 20 includes two gas containers 11, a switch 12, a gas meter 13 as a flow rate measurer, and two gas appliances 14. Examples of the consumer's place 20 include a hospital, a school, a municipal facility, a nursing care facility, an ordinary home, and a commercial facility. However, the consumer's place 20 is not limited to these and may be a building that may use gas.

The gas container 11 is also called a gas cylinder. The gas container 11 is filled with gas, such as LP gas (liquefied petroleum gas). In the following description, the LP gas is simply referred to as gas. The switch 12 switches a gas supply passage such that the gas in one of the two gas containers 11 is supplied to the consumer's place 20. Thus, even when the gas in one of the two gas containers 11 runs out, the gas in the other gas container 11 may be supplied to the gas appliance 14.

In the present embodiment, when the gas container 11 to be used is switched by the switch 12, the gas container 11 that has been used until this switching is in a gas run-out state. In this case, the switch 12 detects a change in pressure applied in the gas container 11 and switches the gas container 11. Specifically, the gas container 11 is filled with the gas under pressure by the switch 12. When the gas runs out, the pressure decreases. The switch 12 detects the change in the pressure and switches the gas container 11 at a timing at which the pressure has decreased. Therefore, the decreasing of the pressure detected by the switch 12 can be regarded as the gas run-out. Moreover, the gas run-out includes a case where the gas container 11 is manually switched when the gas appliance 14 cannot be used due to the pressure decrease. Furthermore, the gas run-out includes a case where instead of the pressure, for example, a remaining amount obtained by subtracting a used gas amount from an assumed gas volume is zero or a value close to zero. This principle regarding the gas run-out is applied to each gas container 11.

The gas meter 13 measures, for example, the flow rate of the gas flowing to the gas appliance 14 from the gas container 11 located at the consumer's place 20 and converts the flow rate into a reference value indicating information regarding the use amount (consumption) of the gas. When the gas meter 13 detects an abnormality, the gas meter 13 may execute a measure, such as blocking of the gas supply passage by a blocker.

The gas meter 13 includes a communicator 13a. The communicator 13a has a function of wirelessly communicating with a communicator 3 in the center server 10. A communication network, such as the Internet, a LAN, a LPWA (Low Power Wide Area), or WI-SUN, can be used as a wireless communication system between the communicator 13a and the communicator 3 of the center server 10. The communicator 13a periodically (once a day, for example) transmits information regarding the reference value indicating the information of the gas use amount (consumption) of the consumer's place 20 to the communicator 3 of the center server 10 together with date information regarding use or non-use (i.e., the use amount is zero), an ID that specifies the consumer's place 20, and location area information of the consumer's place 20. The communicator 13a does not have to be located in the gas meter 13 and may be located separately from the gas meter 13.

The gas appliance 14 is, for example, a gas stove, a gas water heater, a gas fan heater, or the like. However, the gas container 14 is not limited to these and may be equipment that consumes gas.

The center server 10 includes a remaining amount calculator 1, a determiner 2, an informer 3, a storage 4, and the communicator 5. The remaining amount manager 1, the determiner 2, and the informer 3 among the above components of the center server 10 are functionally realized by: a microcontroller including a CPU (Central Processing Unit) and a memory (a ROM (Read Only Memory) and a RAM (Random Access Memory)) storing a program; an ASIC (Application Specific Integrated Circuit); or the like. Examples of the storage 4 include various memories and hard disks. The center server 10 may be configured by a cloud system.

The remaining amount calculator 1 periodically (once a day, for example) receives a measurement result of the gas use amount which is transmitted from the communicator 13a of the gas meter 13 of each consumer's place 20 through the communicator 3. The remaining amount calculator 1 calculates the present remaining gas amount of the gas container 11 from the measurement result based on gas container installation information given to each consumer's place 20. In this case, the remaining amount calculator 1 can obtain the remaining gas amount by subtracting the above use amount from an initial amount of gas in the gas container 11 which is prestored in the storage 4. The gas container installation information is information necessary when calculating the remaining gas amount based on the measurement result of the gas use amount by the gas meter 13, and is information indicating the number of consumer's places 20 associated with one gas container 11. In FIG. 2, the number of consumer's places 20 associated with one gas container 11 is one. Therefore, the gas container installation information indicates one. On the other hand, in the case of, for example, an apartment building including a plurality of consumer's places 20, the gas meters 13 are provided for the respective consumer's places 20, and the gas containers 11 are collected at one place. To be specific, the number of gas containers 11 associated with the consumer's places 20 is one. Therefore, for example, when the number of consumer's places 20 is four, the gas container installation information indicates four. The gas container installation information may include the number of gas containers 11 located upstream of the switch 12 in the consumer's place 20.

The remaining amount calculator 1 may use a vaporization rate when calculating the remaining gas amount. In this case, the remaining amount calculator 1 can calculate the remaining gas amount by using the vaporization rate corresponding to a location area of the consumer's place 20 corresponding to the gas meter 13 that transmits the measurement result or the vaporization rate corresponding to a date on which the measurement result is obtained by the gas meter 13.

Furthermore, based on the measurement result of the gas meter 13, the remaining amount calculator 1 calculates, as a first predicted remaining amount, the remaining gas amount of the gas container 11 after a lapse of a predetermined number of days. Moreover, based on the first predicted remaining amount, the remaining amount calculator 1 determines whether to calculate, as a second predicted remaining amount, the remaining gas amount of the gas container 11 after a lapse of the number of days obtained by adding a predetermined number of additional days to the predetermined number of days. Then, when the remaining amount calculator 1 determines to calculate the second predicted remaining amount, the remaining amount calculator 1 calculates the second predicted remaining amount. The above predetermined number of days denotes the number of days required from when the below-described replacement timing is determined by the determiner 2 until the gas container 11 is replaced by a gas supplier. For example, the above predetermined number of days is seven. To be specific, the first predicted remaining amount is a predicted value of the remaining gas amount after, for example, a lapse of seven days. Moreover, the above number of additional days is, for example, one. To be specific, the second predicted remaining amount is the predicted value of the remaining gas amount after, for example, a lapse of eight days (= seven days + one day). A case where the second predicted remaining amount is calculated by the remaining amount calculator 1 and a case where the second predicted remaining amount is not calculated by the remaining amount calculator 1 will be described later.

When calculating the first predicted remaining amount and the second predicted remaining amount, the remaining amount calculator 1 can calculate an average value by, for example, dividing a cumulative value of the gas use amount for the past 10 days by 10 days. Based on the obtained average value, the remaining amount calculator 1 can calculate the first predicted remaining amount and the second predicted remaining amount for each consumer's place 20. The first predicted remaining amount and the second predicted remaining amount may be calculated by an artificial intelligence 1a included in the remaining amount calculator 1.

The determiner 2 determines the replacement timing of the gas container 11 based on the first predicted remaining amount calculated by the remaining amount calculator 1 or based on the first predicted remaining amount and the second predicted remaining amount calculated by the remaining amount calculator 1. Details of the process of determining the replacement timing by the determiner 2 will be described later.

The informer 3 receives information regarding the gas use amount measured by the gas meter 13 of the consumer's place 20, through the communicator 5. The informer 3 controls a display, an audio device, or the like to inform of a warning. Based on information regarding the replacement timing of the gas container 11 determined by the determiner 2, the informer 3 informs the gas supplier, who replaces the gas container 11, of the warning that urges the gas supplier to replace the gas container 11.

The storage 4 stores the information of the gas use amount of the consumer's place 20, which has been received from the communicator 13a through the communicator 3, together with the date information regarding use or non-use (i.e., the use amount is zero), the ID that specifies the consumer's place 20, and the location area information of the consumer's place 20. Moreover, the storage 4 stores: the first predicted remaining amount and the second predicted remaining amount calculated by the remaining amount calculator 1; a first threshold for determining the replacement of the gas container 11; a second threshold for determining the gas run-out of the gas container 11; and the like.

The first threshold may be a value corresponding to, for example, 5% of the volume of the gas container 11. However, the first threshold is not limited to this and may be a value corresponding to, for example, more than 5% and not more than 50%. The above 5% may be 5% of the total of the volumes of the gas containers 11 in each consumer's place 20 (i.e., the sum of the volumes of the gas containers 11) or may be 5% of the volume of one of the gas containers 11. Moreover, the second threshold may be a value corresponding to, for example, 0% of the volume of the gas container 11.

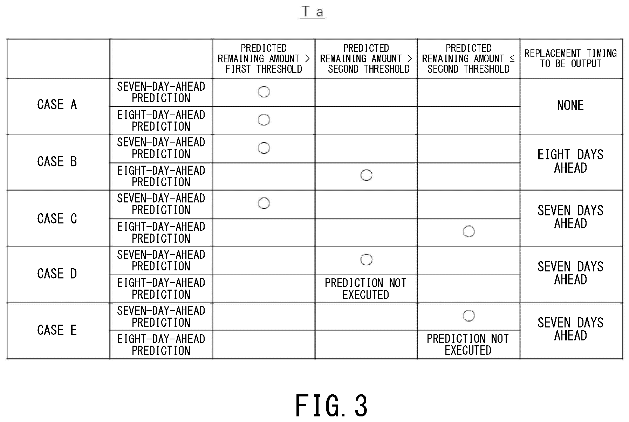

Next, the replacement timing of the gas container 11 which is determined and output by the determiner 2 based on the first predicted remaining amount and the second predicted remaining amount calculated by the remaining amount calculator 1 will be described using a specific example. FIG. 3 is an explanatory diagram showing a table Ta including the replacement timing of the gas container 11 based on the first predicted remaining amount and the second predicted remaining amount. The table Ta is stored in the storage 4. A seven-day-ahead prediction in FIG. 3 corresponds to the first predicted remaining amount calculated by the remaining amount calculator 1, and an eight-day-ahead prediction corresponds to the second predicted remaining amount calculated by the remaining amount calculator 1.

As shown by Case A in FIG. 3, when the first predicted remaining amount and the second predicted remaining amount exceed the first threshold, the determiner 2 determines that there is a margin in the remaining gas amount in the gas container 11, and therefore, does not output the replacement timing of the gas container 11 to the informer 3. Thus, the informer 3 does not perform the informing to the gas supplier.

Moreover, as shown by Case B in FIG. 3, when the first predicted remaining amount exceeds the first threshold, but the second predicted remaining amount is below the first threshold and exceeds the second threshold, the determiner 2 determines, as the replacement timing of the gas container 11, a timing after a lapse of eight days from the present time and outputs the replacement timing to the informer 3. Thus, the informer 3 informs the gas supplier that the replacement timing of the gas container 11 is the timing after a lapse of eight days.

Moreover, as shown by Case C in FIG. 3, when the first predicted remaining amount exceeds the first threshold, but the second predicted remaining amount is not more than the second threshold, the determiner 2 determines, as the replacement timing of the gas container 11, a timing after a lapse of seven days from the present time and outputs the replacement timing to the informer 3. Thus, the informer 3 informs the gas supplier that the replacement timing of the gas container 11 is the timing after a lapse of seven days.

Moreover, as shown by Case D in FIG. 3, when the first predicted remaining amount is below the first threshold and exceeds the second threshold, the remaining amount calculator 1 does not perform the calculation of the second predicted remaining amount. This is because the first predicted remaining amount is a value based on which it can be determined, without the need to calculate the second predicted remaining amount, that the gas container 11 needs to be replaced. In this case, the determiner 2 determines, as the replacement timing of the gas container 11, the timing after a lapse of seven days from the present time and outputs the replacement timing to the informer 3. Thus, the informer 3 informs the gas supplier that the replacement timing of the gas container 11 is the timing after a lapse of seven days.

Furthermore, as shown by Case E in FIG. 3, when the first predicted remaining amount is below the first threshold and not more than the second threshold, the remaining amount calculator 1 also does not perform the calculation of the second predicted remaining amount. The reason is the same as that described above. In this case, the determiner 2 determines, as the replacement timing of the gas container 11, the timing after a lapse of seven days from the present time and outputs the replacement timing to the informer 3. Thus, the informer 3 informs the gas supplier that the replacement timing of the gas container 11 is the timing after a lapse of seven days.

As described above, according to the remaining gas amount management system 100 of the present embodiment, the first predicted remaining amount of the gas in the gas container 11 after a lapse of the predetermined number of days is calculated, and in addition, the remaining gas amount of the gas container 11 after a lapse of the number of days obtained by adding the predetermined number of additional days (one day, for example) to the predetermined number of days is also calculated as the second predicted remaining amount. To be specific, the remaining gas amount after a lapse of the number of days obtained by adding a margin to the predetermined number of days is calculated as the second predicted remaining amount. Thus, the replacement timing of the gas container 11 can be determined based on the first predicted remaining amount or based on the first predicted remaining amount and the second predicted remaining amount. Therefore, even if there is a sharp decrease in the remaining gas amount due to the gas consumption, which makes it difficult to prevent the gas run-out by only calculating the first predicted remaining amount, the gas run-out can be suppressed by timely replacing the gas container 11. Thus, it is possible to enhance reliability in suppressing gas run-out compared to the conventional systems.

### Modified Example

The present disclosure is not limited to the above-described embodiment, and various modifications may be made without departing from the scope of the present disclosure. Examples are as follows.

In the above embodiment, the remaining gas amount management system 100 is described as a technical concept including the gas meter 13 and the center server 10. However, the above embodiment is not limited to this. The remaining gas amount management system 100 may be a system provided at the gas meter 13.

Moreover, in the above embodiment, the remaining amount calculator 1, the determiner 2, and the informer 3 are located in the center server 10. However, the above embodiment is not limited to this. The remaining amount calculator 1, the determiner 2, and the informer 3 may be located in the gas meter 13, and the center server 10 may have a function of outputting informing contents.

Moreover, in the above embodiment, when the first predicted remaining amount is below the first threshold and exceeds the second threshold, the remaining amount calculator 1 does not perform the calculation of the second predicted remaining amount. Similarly, when the first predicted remaining amount is below the first threshold and not more than the second threshold, the remaining amount calculator 1 does not perform the calculation of the second predicted remaining amount. However, the above embodiment is not limited to this. The remaining amount calculator 1 may perform the calculation of the second predicted remaining amount.

Moreover, in the above embodiment, the remaining amount calculator 1 includes the artificial intelligence 1a. However, it is sufficient for the remaining amount calculator 1 to be able to calculate the remaining gas amount, and the artificial intelligence 1a is not an essential component.

Moreover, the above embodiment has described an example in which each consumer's place 20 includes two gas containers 11 and two gas appliances 14. However, the above embodiment is not limited to this. The number of gas containers 11 may be one or may be three or more, and the number of gas appliances 14 may be one or may be three or more.

Furthermore, in the above embodiment, the gas container 11 is filled with the LP gas (liquefied petroleum gas) as one example of the gas. However, the above embodiment is not limited to this. The gas container 11 may be filled with another gas, such as oxygen.

### Additional Information

The above embodiment discloses the following technologies.

### First Technology

A remaining gas amount management system including: a flow rate measurer that measures gas flowing to a gas appliance from a gas container located at a consumer's place or at each of a plurality of consumer's places; a remaining amount calculator that calculates, as a first predicted remaining amount based on a measurement result of the flow rate measurer, a remaining gas amount of the gas container after a lapse of a predetermined number of days, and calculates, as a second predicted remaining amount, the remaining gas amount of the gas container after a lapse of a number of days obtained by adding a predetermined number of additional days to the predetermined number of days; and a determiner that determines a replacement timing of the gas container based on the first predicted remaining amount and the second predicted remaining amount.

According to this configuration, the first predicted remaining amount of the gas in the gas container after a lapse of the predetermined number of days is calculated, and in addition, the remaining gas amount of the gas container after a lapse of the number of days obtained by adding the predetermined number of additional days (one day, for example) to the predetermined number of days is also calculated as the second predicted remaining amount. To be specific, the remaining gas amount after a lapse of the number of days obtained by adding a margin to the predetermined number of days is calculated as the second predicted remaining amount. Thus, the replacement timing of the gas container can be determined based on the first predicted remaining amount and the second predicted remaining amount. Therefore, even if there is a sharp decrease in the remaining gas amount due to the gas consumption, which makes it difficult to prevent the gas run-out by only calculating the first predicted remaining amount, the gas run-out can be suppressed by timely replacing the gas container. Thus, it is possible to enhance reliability in suppressing gas run-out compared to the conventional systems.

### Second Technology

The remaining gas amount management system according to the first technology, wherein when the first predicted remaining amount is below a first threshold for determining replacement of the gas container, the determiner determines, as a replacement date of the gas container, a date after a lapse of the predetermined number of days.

According to this configuration, when the first predicted remaining amount is below the first threshold (for example, an amount corresponding to 10% of the volume of the gas container), a date after a lapse of the predetermined number of days is determined as the replacement date of the gas container. Thus, when there are a pair of gas containers in the consumer's place, the consumption of the gas in the reserve gas container can be prevented. Moreover, when there is one gas container in the consumer's place, the gas run-out can be prevented.

### Third Technology

The remaining gas amount management system according to the first or second technology, wherein when the first predicted remaining amount exceeds a first threshold for determining replacement of the gas container, and the second predicted remaining amount is below a second threshold for determining gas run-out of the gas container, the determiner determines, as a replacement date of the gas container, a date after a lapse of the predetermined number of days.

According to this configuration, when the first predicted remaining amount exceeds the first threshold, but the second predicted remaining amount is below the second threshold, prompt replacement of the gas container is required. Therefore, a date after a lapse of the predetermined number of days can be determined as the replacement date of the gas container.

### Fourth Technology

The remaining gas amount management system according to any one of the first to third technologies, wherein when the first predicted remaining amount exceeds a first threshold for determining replacement of the gas container, and the second predicted remaining amount exceeds a second threshold for determining gas run-out of the gas container, the determiner determines, as a replacement date of the gas container, a date after a lapse of a number of days obtained by adding one or more days to the predetermined number of days.

According to this configuration, when the first predicted remaining amount exceeds the first threshold, and the second predicted remaining amount exceeds the second threshold, there is a slightly larger margin than when the second predicted remaining amount is below the second threshold. Therefore, a date after a lapse of the number of days obtained by adding one or more days to the predetermined number of days can be determined as the replacement date of the gas container.

### Fifth Technology

The remaining gas amount management system according to any one of the first to fourth technologies, wherein when the first predicted remaining amount is below a first threshold for determining replacement of the gas container and exceeds a second threshold for determining gas run-out of the gas container, or when the first predicted remaining amount is below the second threshold, the remaining amount calculator does not perform calculation of the second predicted remaining amount.

According to this configuration, in the above cases, prompt replacement of the gas container is required. Therefore, it is possible to avoid the calculation of the second predicted remaining amount which is unnecessary in these cases. Moreover, since the calculation of the second predicted remaining amount is avoided, calculation processing by a CPU and the like can be avoided, and the load on the center server and the like can be reduced.

### Six Technology

The remaining gas amount management system according to any one of the first to fifth technologies, wherein the predetermined number of days is a number of days required from when the replacement timing is determined by the determiner until the gas container is replaced by a gas supplier.

According to this configuration, the predetermined number of days, which serves as a reference for calculating the first predicted remaining amount and the second predicted remaining amount, can be based on the number of days required for a gas container replacement process by the gas supplier.

### Reference Signs List

- 1: remaining amount calculator
- 2: determiner
- 3: informer
- 4: storage
- 5: communicator
- 10: center server
- 11: gas container
- 13: gas meter
- 13a: communicator
- 14: gas appliance
- 20: consumer's place
- 100: remaining gas amount management system

## Claims

1. A remaining gas amount management system comprising:
a flow rate measurer that measures gas flowing to a gas appliance from a gas container located at a consumer's place or at each of a plurality of consumer's places;
a remaining amount calculator that calculates, as a first predicted remaining amount based on a measurement result of the flow rate measurer, a remaining gas amount of the gas container after a lapse of a predetermined number of days, and calculates, as a second predicted remaining amount, the remaining gas amount of the gas container after a lapse of a number of days obtained by adding a predetermined number of additional days to the predetermined number of days; and
a determiner that determines a replacement timing of the gas container based on the first predicted remaining amount and the second predicted remaining amount.

2. The remaining gas amount management system according to claim 1, wherein when the first predicted remaining amount is below a first threshold for determining replacement of the gas container, the determiner determines, as a replacement date of the gas container, a date after a lapse of the predetermined number of days.

3. The remaining gas amount management system according to claim 1, wherein when the first predicted remaining amount exceeds a first threshold for determining replacement of the gas container, and the second predicted remaining amount is below a second threshold for determining gas run-out of the gas container, the determiner determines, as a replacement date of the gas container, a date after a lapse of the predetermined number of days.

4. The remaining gas amount management system according to claim 1, wherein when the first predicted remaining amount exceeds a first threshold for determining replacement of the gas container, and the second predicted remaining amount is below the first threshold and exceeds a second threshold for determining gas run-out of the gas container, the determiner determines, as a replacement date of the gas container, a date after a lapse of a number of days obtained by adding one or more days to the predetermined number of days.

5. The remaining gas amount management system according to claim 1, wherein when the first predicted remaining amount is below a first threshold for determining replacement of the gas container and exceeds a second threshold for determining gas run-out of the gas container, or when the first predicted remaining amount is below the second threshold, the remaining amount calculator does not perform calculation of the second predicted remaining amount.

6. The remaining gas amount management system according to claim 1, wherein the predetermined number of days is a number of days required from when the replacement timing is determined by the determiner until the gas container is replaced by a gas supplier.
